# EUROPEAN PATENT SPECIFICATION

(11) **EP 2 911 342 B1**
(45) Date of publication and mention of the grant of the patent: **04.07.2018**
(21) Application number: 13801269.5
(22) Date of filing: 16.07.2013
(51) Int. Cl.: G06F 9/455, H04L 12/28

(54) **HOME GATEWAY AND INTELLIGENT TERMINAL INTEGRATED SYSTEM AND COMMUNICATION METHOD THEREFOR**
INTEGRIERTES SYSTEM AUS HEIM-GATEWAY UND INTELLIGENTEM ENDGERÄT SOWIE KOMMUNIKATIONSVERFAHREN DAFÜR
PASSERELLE DOMESTIQUE ET SYSTÈME INTÉGRÉ DE TERMINAL INTELLIGENT ET PROCÉDÉ DE COMMUNICATION CORRESPONDANT

(30) Priority: 19.10.2012 CN 201210401199
(43) Date of publication of application: 26.08.2015
(73) Proprietor: ZTE Corporation, Shenzhen, Guangdong 518057 (CN)
(72) Inventor: HU, Li, Shenzhen Guangdong 518057 (CN); LU, Huan, Shenzhen Guangdong 518057 (CN); LI, Xinghua, Shenzhen Guangdong 518057 (CN)
(74) Representative: Brevalex
(86) International application number: PCT/CN2013/079475
(87) International publication number: WO 2013/182140

(56) References cited:
- WO-A2-2007/058415
- CN-A- 101 218 797
- CN-A- 101 902 375
- CN-A- 102 938 718
- US-B1- 8 200 796

## Description

### TECHNICAL FIELD

The disclosure relates to a control technology of the Internet of Things, and more particularly to a home gateway and smart terminal integrated system and a communication method thereof.

### BACKGROUND

Statistical data of 3^{rd} Generation (3G) operators have shown that almost 80% of 3G communication services used by users occur in an indoor environment. The so-called indoor environment may be considered as a "static" state or a "non-mobile" state. Generally, a user who needs to concentrate on something is frequently in a "static" state, which means that most 3G communication traffic will occur indoors. Home is an indoor environment in which most service communication is performed by users, and communication services occurring in home mainly lie in two aspects, life and entertainment. A user may browse webpage, view online video, shop online play games, and etc. through service communication between a smart terminal device and a home network or an external network.

With constant improvement of smart terminal technologies, users prefer to use smart terminal devices, such as smart phones and tablet computers and etc. to perform service communication, which gradually weakens the dominance of household Personal Computers (PC). However, PC is still required when a home service, such as a large scale Three Dimensions (3D) game and playing of a high-definition video, needs to occupy more computing and storage resources.

Since family members of different ages require different services, smart terminal devices may be insufficient in the case that there are a small number of smart terminal devices or household PCs. It will increase the economic burden to purchase a tablet computer or a PC for each family member, and in addition, most home services do not need to occupy many software and hardware resources during operation, and one tablet computer or PC is enough. Therefore, purchasing a tablet computer or PC for each family member will reduce the utilization rate of device resources and cause resource waste.

Service communication between a smart terminal device and a home network or an external network mainly refers to data exchange between a smart terminal device and a home gateway which is a core device in the home network to realize connection among all smart terminal devices inside a home on one hand, e.g. transmitting a fantastic movie in a tablet computer or a PC to a television to watch, and on the other hand, to realize connection of a smart terminal device inside the home or an internal network with an external network. Since most home gateway devices on the market are only provided with a routing and forwarding function at present, which not only results in a single function, but also fails to provide an extension function. In addition, it is impractical to purchase a tablet computer or a PC for each family member. Therefore, a home gateway and smart terminal integrated solution is needed urgently.

US 8200796B1 (MARGULIS NEAL D [US]), 12 June 2012, discloses a graphics display system for multiple remote terminals.

WO 2007/058415 A2 (RINNAI KOREA CORP [KR]; CHOI HYUN WOO [KR]; LEE HWANG EUI [KR]; PARK D), 24 May 2007, discloses integrated gateway for distribution home network and software framework structure for the same.

### SUMMARY

In view of this, the main purpose of the embodiments of the disclosure is to provide a home gateway and smart terminal integrated system and a communication method thereof to solve the problems in the prior art that the utilization rate of device resources is low, functions of a home gateway are single and function extension cannot be provided.

To realize the purpose above, the technical solution of the embodiments of the disclosure is realized by the following way.

A home gateway and smart terminal integrated system is provided, as recited in claim 1.

A communication method for a home gateway and smart terminal integrated system is provided, as recited in claim 7. According to the home gateway and smart terminal integrated system and the communication method thereof provided by the embodiments of the disclosure, the home gateway therein adopts a multi-core processor architecture and virtualization technology, and has abundant software and hardware resources, in addition to having a routing and forwarding function of an existing home gateway. The smart terminals included in the system can implement secure operation on smart household terminals only using the software and hardware resources of the home gateway. Without purchasing a smart terminal for each family member, the embodiments of the disclosure can solve the problems in the prior art that the resource utilization rate of a smart terminal device is low, functions of an existing home gateway are single and function extension cannot be provided.

### BRIEF DESCRIPTION OF THE DRAWINGS

Fig. 1 is a structural diagram illustrating components of a home gateway and smart terminal integrated system according to an embodiment of the disclosure;
Fig. 2 is a flowchart of a method for a home gateway and smart terminal integrated system to communicate with external data according to an embodiment of the disclosure;
Fig. 3 is a schematic diagram illustrating an implementation principle for a home gateway and smart terminal integrated system to display a user graphic interface to a smart terminal according to an embodiment of the disclosure;
Fig. 4 is a schematic diagram illustrating an implementation principle for a home gateway and smart terminal integrated system to respond to an input operation of a smart terminal according to an embodiment of the disclosure;
Fig. 5-1 is a schematic diagram illustrating a process of a home gateway and smart terminal integrated system communicating with a home network and a WAN according to an embodiment of the disclosure; and
Fig. 5-2 is a schematic diagram illustrating a principle for implementing communication data forwarding by a driver queue according to an embodiment of the disclosure.

### DETAILED DESCRIPTION

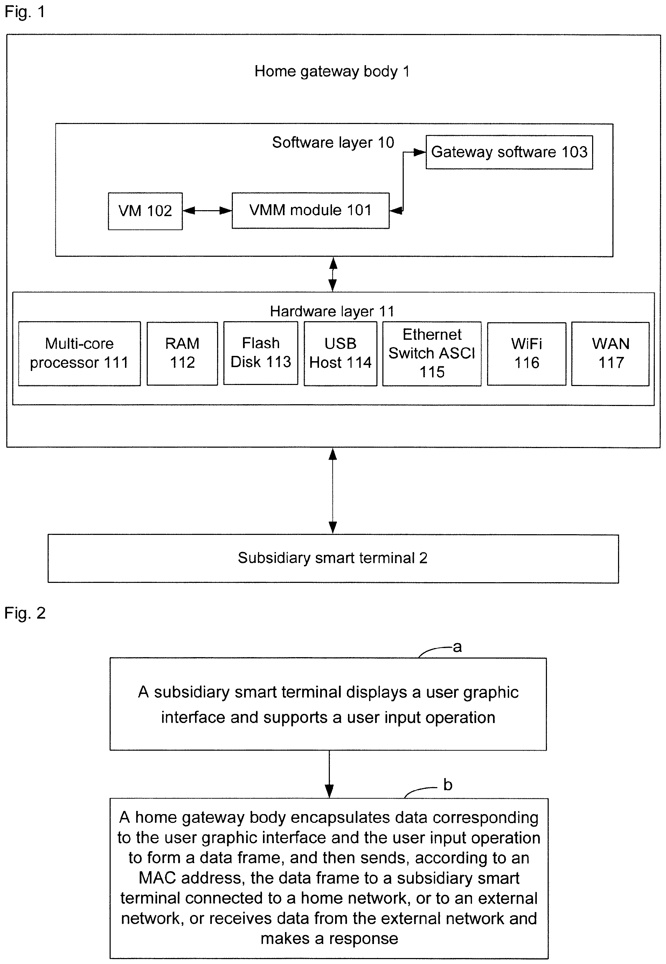

A home gateway and smart terminal integrated system provided by an embodiment of the disclosure, as shown in Fig. 1, includes a home gateway 1 and at least one smart terminal 2, wherein the smart terminal 2 is configured to display a user graphic interface and support a user input operation;
correspondingly, the home gateway 1 performs software and hardware resource processing on the user graphic interface and the user input operation, and sends a processing result to the smart terminal 2 or an external network, or receives data outside itself and makes a response.

Here, the number of smart terminals 2 may be N and N is a positive integer.

The smart terminal 2 includes a terminal hardware layer and a terminal software layer, wherein the terminal software layer includes a second driver proxy, and a network driver. The terminal hardware layer includes a wireless network/Ethernet chip (WiFi/Ethernet hardware) and a touch screen chip (touch screen hardware), wherein the second driver proxy includes a terminal display driver proxy and a touch driver proxy.

The smart terminal 2 may be also embedded in other household smart terminals having a display and input function through software installation so as to utilize software and hardware resources of other household smart terminals to display the user graphic interface and complete the user input operation.

The home gateway 1 includes a hardware layer 11 and a software layer 10. Preferably, the software layer 10 includes a Virtual Machine Monitor (VMM) module 101, a Virtual Machine (VM) module 102, and a home gateway software module 103; the hardware layer 11 includes a multi-core processor 111, a random access memory (RAM) 112, a solid state disk (e.g. flash disk) 113, a Universal Serial Bus (USB) host 114, an Ethernet switch module (e.g. Ethernet switch ASCI) 115, a wireless network access module (Wireless Fidelity, WiFi) 116, and an external network (e.g. Wide Area Network, WAN) interface module 117.

The hardware layer 11 of the home gateway 1 adopts a multi-core processor architecture, and the software layer 10 operating on the hardware layer 11 adopts the VMM module 101 in virtualization technology. The VMM module 101 includes a switcher software module, a first driver proxy, an Ethernet driver, a WiFi driver, and an external network driver (e.g. WAN Driver).

The VMM module 101 is configured to establish at least one VM 102, and distribute and schedule a hardware resource for the VM 102.

The VM 102 includes a smart terminal operating system (hereinafter referred to as operating system for short) and an application layer (Applications); the operating system is configured to draw the user graphic interface and respond to the user input operation, and is further configured to complete data communication outside itself. Specifically, the operating system is connected with the switcher software module to complete data communication between the operating systems, between the operating system and a home network, and between external networks.

The home gateway software module 103 is configured to operate a built-in software function of an existing home gateway, wherein the operating system includes a display driver module, a touch driver module and a network driver module.

The first driver proxy includes a Gateway Display Driver Proxy (GDDP) and an input driver proxy, wherein the network driver module is provided with a network driver module queue and is configured to drive, when the operating system communicates with data outside itself, the operating system to write the data into the network driver module queue; the Ethernet driver is provided with an Ethernet driver queue, and is configured to drive, when the integrated system performs wired communication with a home network, the integrated system to write data into the Ethernet driver queue; the WiFi driver is provided with a WiFi driver queue and is configured to drive, when the integrated system performs wireless communication with the home network, the integrated system to write data into the WiFi driver queue; the WAN driver is provided with a WAN driver queue and is configured to drive, when the integrated system performs data communication with an external network, the integrated system to write data into the external network driver queue.

The operating system may be Android or Linux, and etc.

The VMM module 101 applies a microkernel technology to provide the operating system with basic kernel functions including address space management, thread scheduling and communication among processes etc. and set a function of the first driver proxy in a user mode to prevent unavailability of the integrated system caused by an unreasonable layout.

Alternatively, the home gateway software module 103 may operate in the VMM module 101 and may also operate in the VM 102. The home gateway software module 103 is provided with core communication functions including routing and forwarding and etc., which may be completed by binding at least one kernel in the multi-core processor.

The operating system and the smart terminals 2 are connected in a wired or wireless way, wherein the wireless way includes the WiFi 116 and the wire way includes an Ethernet interface, a Passive Optical Network (PON) and a Digital Subscriber Line (DSL).

When a user touches the smart terminal 2, the smart terminal 2 acquires a touch action, and delivers, through the WiFi 116 or the Ethernet interface, the touch to the Ethernet switcher ASCI 115. The VMM module 101 controls the Ethernet switcher ASCI 115 to send the touch to the VM 102. The operating system in the VM 102 reads the touch and makes a response.

When the smart terminal 2 is configured to display the user graphic interface of the operating system, the VMM module 101 acquires an input control operation on the operating system, processes frame data of the input control operation to form frame cache data and store the frame cache data in the display driver module, and transmits, through a connection established between the GDDP and the terminal display driver proxy, the frame cache data to the smart terminal 2. The smart terminal 2 receives and responds to the frame cache data which then form the user graphic interface, and displays the user graphic interface to a user, wherein the GDDP may accelerate a reading operation of the frame cache data by storing the frame cache data.

Based on the home gateway and smart terminal integrated system, an embodiment of the disclosure further provides a communication method for a home gateway and smart terminal integrated system. As shown in Fig. 2, the method includes:
Step a: a smart terminal displays a user graphic interface and supports a user input operation; and
Step b: a home gateway encapsulates data corresponding to the user graphic interface and the user input operation to form a data frame, and then sends, according to an MAC address, the data frame to a smart terminal connected to a home network, or to an external network, or receives data from an external network and makes a response.

Here, data communication between the integrated system and the exterior mainly refers to data communication between the operating system and a home network or an external network.

Preferably, when the data communication is performed between the operating system and the home network, their respective driver modules first encapsulate data to form a data frame, a VMM module 101 then captures the data frame and delivers the data frame to a switcher software module; the switcher software module performs data transmission according to a target MAC address.

When the data communication is performed between the operating system and an external network, their respective driver modules first encapsulate data to form a data frame, a VMM module 101 then captures the data frame and delivers the data frame to the switcher software module; after sending the data frame to the home gateway software module 103 to process, the switcher software module performs data transmission according to a target MAC address; wherein the driver module includes a network driver module of the operating system, an Ethernet driver, a WiFi driver and a WAN driver;

Specifically, data sent by the operating system to the home network is first encapsulated by the network driver module to form a data frame which is then captured by the VMM module 101 and delivered to the switcher software module. After the switcher software module writes the data frame into the Ethernet driver queue or the WiFi driver queue according to a target MAC address, the switcher software module forwards the data frame according to the MAC address.

The data sent by the home network to the operating system is first encapsulated by the Ethernet driver or the WiFi driver to form a data frame which is then captured by the VMM module 101 and delivered to the switcher software module. After the switcher software module writes, according to a target MAC address, the data frame into the network driver module queue corresponding to the network driver module of the operating system, the switcher software module subsequently transmits the data frame to the applications to execute a response of the data frame.

Data sent by the operating system to the WAN is first encapsulated by the network driver module to form a data frame which is then captured by the VMM module 101 and delivered to the switcher software module. The switcher software module sends the data frame to the home gateway software module 103 to process, and then the switcher software module writes, according to a target MAC, the data frame into the WAN driver queue, and finally sends, according to the MAC address, the data frame to the WAN.

Data sent by the WAN to the operating system is first encapsulated by the WAN driver to form a data frame which is then captured by the VMM module 101 and delivered to the switcher software module. The switcher software module sends the data frame to the home gateway software module 103 to process, and then the switcher software module writes, according to a target MAC, the data frame into the network driver module queue. The operating system reads the data frame and makes a response. The applications execute the response.

Data among the operating systems is encapsulated by the network driver module to form a data frame which is then forwarded directly by the switcher software module.

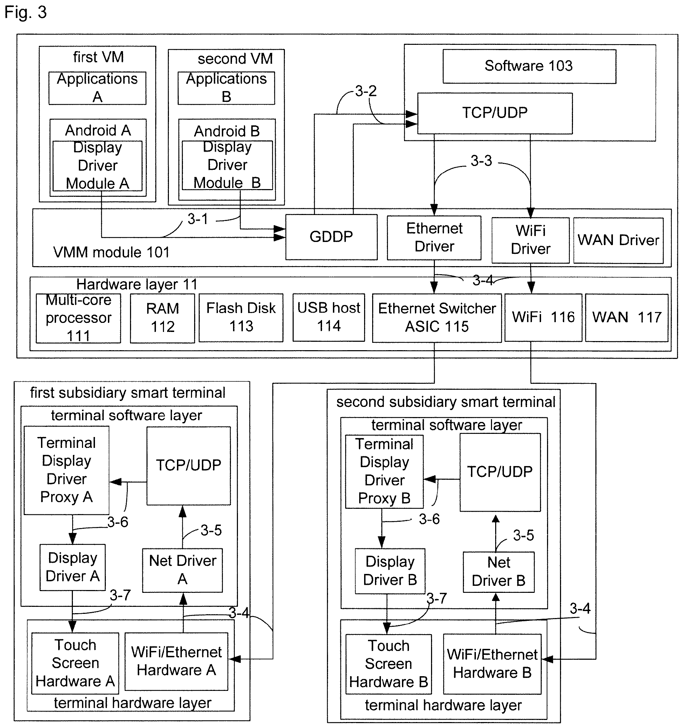

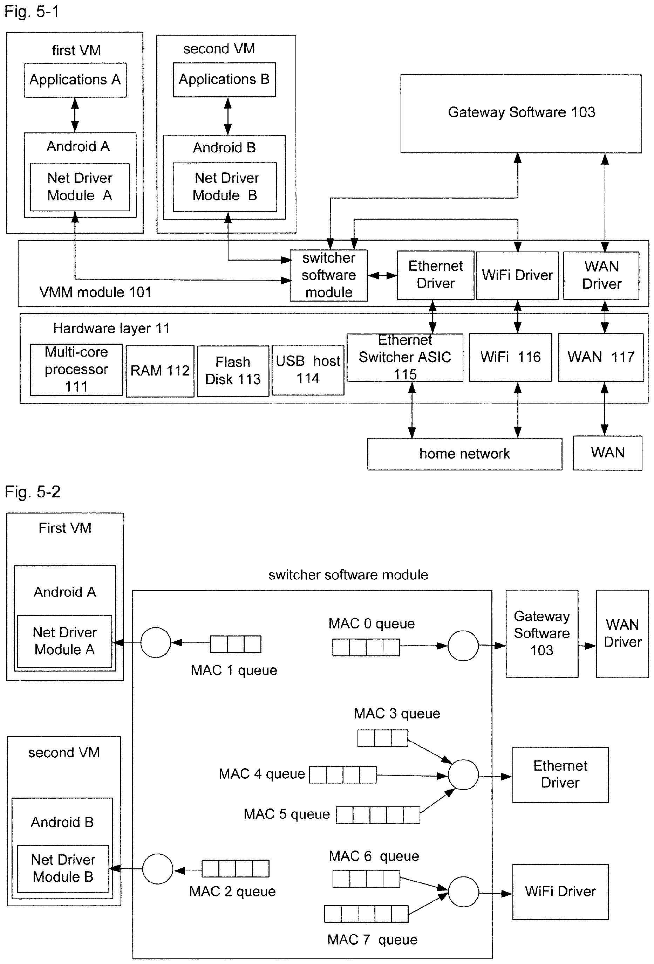

In the embodiments as shown in Fig. 3 to Fig. 5-2, the operating system is an Android system and the home gateway software module 103 operates in the VMM module 101.

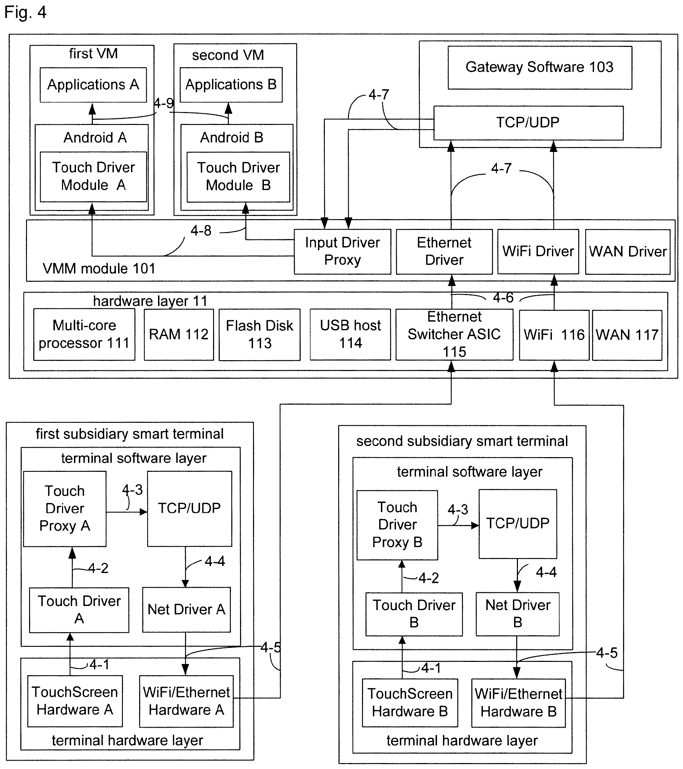

In the embodiments as shown in Fig. 3 and Fig. 4, the home gateway software module 103 may apply Transmission Control Protocol (TCP)/a User Datagram Protocol (UDP). The VMM module 101 creates two said VMs 102, a first VM and a second VM. The first VM operates in Android A system which corresponds to applications A, while the second VM operates in Android B system which corresponds to applications B. Corresponding to the first VM and the second VM, the smart terminal 2 includes a first smart terminal and a second smart terminal. The first smart terminal includes a first terminal software layer and a first terminal hardware layer. The second smart terminal includes a second terminal software layer and a second terminal hardware layer. The first terminal hardware layer includes WiFi/Ethernet hardware A and touch screen hardware A. The second terminal hardware layer includes WiFi/Ethernet hardware B and touch screen hardware B.

Fig. 3 is a schematic diagram illustrating an implementation principle for a home gateway and smart terminal integrated system to display a user graphic interface to a smart terminal according to an embodiment of the disclosure.

In the present embodiment, the Android A system includes display driver module A. The Android B system includes display driver module B. The first driver proxy includes a GDDP. The second driver proxy includes a terminal display proxy. The first terminal software layer includes network driver A, TCP/UDP, terminal display driver proxy A and terminal display driver A. The second terminal software layer includes network driver B, TCP/UDP, terminal display driver proxy B and terminal display driver B.

Specifically, the Android A system in the first VM displays, through an Ethernet interface, the user graphic interface to the first smart terminal. The Android B system in the second VM displays, through the WiFi 116, the user graphic interface to the second smart terminal. A process of displaying the user graphic interface to a user is as follows:
Step (3-1): the Android A system performs frame data caching on an input control operation by using the display driver module A, to form frame cache data A;
   the Android B system performs frame data caching on an input control operation by using the display driver module B, to form frame cache data B;
   the VMM module 101 captures the frame cache data A and the frame cache data B and transmits the data A and B to the GDDP;
Step (3-2): the GDDP sends the frame cache data A and the frame cache data B to a TCP/UDP process, wherein the TCP/UDP process is established by the GDDP, the terminal display driver proxy A and the terminal display driver proxy B during respective initialization of the Android A system and the Android B system;
Step (3-3): the TCP/UDP process transmits the frame cache data A to the Ethernet driver and the frame cache data B to the WiFi driver;
Step (3-4): the Ethernet driver transmits the frame cache data A to the Ethernet switcher ASCI 115; the Ethernet switcher ASCI 115 sends, through an Ethernet interface/network cable, the frame cache data A to the WiFi/Ethernet hardware A on the first smart terminal, and the frame cache data A is sent by the Ethernet hardware 1 to the network driver A;
   the WiFi driver transmits the frame cache data B to the WiFi 116; the WiFi 116 sends, through a wireless network, the frame cache data B to the WiFi/Ethernet hardware B of the second smart terminal, and the frame cache data B is sent by the WiFi/Ethernet hardware B to the network driver B;
Step (3-5): the network driver A and the network driver B distribute the frame cache data A and the frame cache data B to the respective TCP/UDP processes of the first smart terminal and the second smart terminal;
Step (3-6): the TCP/UDP process of the first smart terminal sends the frame cache data A to the terminal display drive proxy A; the terminal display drive proxy A transmits the frame cache data A to the display driver A;
   the TCP/UDP process of the second smart terminal sends the frame cache data B to the terminal display drive proxy B; the terminal display drive proxy B transmits the frame cache data B to the display driver B;
Step (3-7): the display driver A writes the frame cache data A into the touch screen hardware A, the display of the first subsidiary terminal makes a response, and forms and displays a user graphic interface A to the user;
   the display driver B writes the frame cache data B into the touch screen hardware B, the display of the second smart terminal makes a response and forms and displays a user graphic interface A to the user.

Here, the GDDP is further configured to store the frame cache data A and the frame cache data B to reduce the cost for the integrated system in data reading.

A process of reading, by the operating system, display screen parameters of the second smart terminal 2 is the same as the process of the embodiments above. In addition, after reading the display screen parameters of the smart terminal 2 for the first time, the operating system may store the display screen parameters into the GDDP. In this way, the cost in reading the display screen parameters from the smart terminal 2 may be reduced, and reading of the parameters may be accelerated. The display screen parameters include the resolution of the display screen, and the number of bits of each pixel of the display screen.

Fig. 4 is a schematic diagram illustrating an implementation principle for a home gateway and smart terminal integrated system to respond to an input operation of a smart terminal according to an embodiment of the disclosure. In the present embodiment, the Android A system includes a touch driver module A. The Android B system includes a touch drive module B. The first driver proxy includes an input driver proxy. The second driver proxy includes a touch driver proxy. The first terminal software layer includes network driver A, TCP/UDP, touch driver proxy A and touch driver A. The second terminal software layer includes network driver B, TCP/UDP, touch driver proxy B and touch driver B.

Specifically, the first VM responds, through the Ethernet interface, to an input operation of the first smart terminal; the second VM responds, through the WiFi 116, to an input operation of the second smart terminal. A specific response process is as follows:
Step (4-1): the touch screen hardware A acquires a user input touch A and reports, through a hardware interruption mode, touch information A to the touch driver A;
   the touch screen hardware B acquires a user input touch B and reports, through a hardware interruption mode, touch information B to the touch driver B;
   wherein the touch information includes a location on the smart terminal 2, where the touch occurs, a touch type, and a pressure received when the smart terminal 2 is touched;
Step (4-2): the touch driver A and the touch driver B send the touch information A and the touch information B to the touch driver proxy A and the touch driver proxy B;
Step (4-3): the touch driver A and the touch driver B send the touch A and the touch B to the TCP/UDP process, wherein the TCP/UDP process is established by the input driver proxy, the touch driver proxy A and the touch driver proxy B during respective self-initialization of the Android A system and the Android B system;
Step (4-4): the TCP/UDP processes send the touch information A and the touch information B respectively to the network driver A and the network driver B;
Step (4-5): the network driver A and the network driver B transmit the touch information A and the touch information B to the WiFi/Ethernet hardware A and the WiFi/Ethernet hardware B;
   the WiFi/Ethernet hardware A transmits, through the Ethernet interface/network cable, the touch information A to the Ethernet switch ASCI 115;
   the WiFi/Ethernet hardware B transmits, through the wireless network, the touch information B to the WiFi 116;
Step (4-6): the Ethernet switcher ASCI 115 forwards the touch information A to the Ethernet driver;
   the WiFi 116 forwards the touch information B to the WiFi driver;
Step (4-7): the Ethernet driver and the WiFi driver deliver, through the TCP/UDP processes, the touch information A and the touch information B to the input driver proxy;
Step (4-8): the VMM module 101 controls the input driver proxy to send the touch information A and the touch information B to the touch module A in the Android A system and the touch module B in the Android B system; and
Step (4-9): the Android A system reads and responds to the touch information A, and the applications A executes a response action A according to the response;
   the android B system reads and responds to the touch information B, and the applications B executes a response action B according to the response.

Fig. 5-1 is a schematic diagram illustrating a process of a home gateway and smart terminal integrated system communicating with a home network and an external network according to an embodiment of the disclosure.

In the embodiments as shown in Fig. 5-1 and Fig. 5-2, the VMM module 101 creates two said VMs 102, a first VM and a second VM. The first VM operates in Android A system which corresponds to applications A, while the second VM operates in Android B system which corresponds to applications B. The Android A system includes a network driver module A and the Android B system includes a network driver module B. The VMM module 101 includes a switcher software module, an Ethernet driver, a WiFi driver, and a WAN driver, wherein the Android A system communicates with a home network, and the Android B system communicates with a WAN.

Data sent by the Android A system to the Android B system is first encapsulated by the network driver module A of the Android A system to form a data frame. The VMM module 101 captures the data frame and delivers the data frame to the switcher software module. The switcher software module writes, according to a target MAC address, the data frame into a network driver module queue B corresponding to the network driver module B of the Android B system. The Android B system reads and responds to the data frame and the applications B executes the response.

Data sent by the Android B system to the Android A system is first encapsulated by the network driver module B of the Android B system to form a data frame. The VMM module 101 captures the data frame and delivers the data frame to the switcher software module. The switcher software module writes, according to a target MAC address, the data frame into a network driver module queue A corresponding to the network driver module A of the Android A system. The Android A system reads and responds to the data frame and the applications A executes the response.

Data sent by the Android A system to the home network is first encapsulated by the network driver module A to form a data frame. The VMM module 101 captures the data frame and delivers the data frame to the switcher software module. The switcher software module writes, according to a target MAC address, the data frame into an Ethernet driver queue or a WiFi driver queue, and the data frame is finally sent to the home network through the Ethernet switcher ASCI 115 or the WiFi 116.

Data sent by the android B system to the WAN is first encapsulated by the network driver module B to form a data frame. The VMM module 101 captures the data frame and delivers the data frame to the switcher software module. The switcher software module will first send the data frame to the home gateway software module 103 to perform processing including Network Address Translation (NAT), Internet Protocol Security (IPSec) and etc., and then writes, according to a target MAC address, the data frame into a WAN driver queue, and the data frame is finally sent by the WAN 117 to the WAN.

Data sent by the home network to the Android A system arrives the Ethernet driver or the WiFi driver through the Ethernet switch ASCI 115 or the WiFi 116. The Ethernet driver or the WiFi driver encapsulates the data to form a data frame. The VMM module 101 captures the data frame and delivers the data frame to the switcher software module. The switcher software module writes, according to a target MAC address, the data frame into the network driver module queue A. The Android A system reads and responds to the data frame. The applications A executes the response.

Data sent by the WAN arrives at the WAN driver through the WAN 117. The WAN driver encapsulates the data into a data frame. The WAN driver transmits the data frame to the home gateway software module 103 and performs processing including NAT and IPSec and etc. After capturing the processed data frame, the VMM module 101 sends the processed data frame to the switch module. The switch module writes, according to a target MAC address, the data frame into the network driver module B. The Android B system reads and responds to the data frame. The applications B executes the response operation.

In the embodiments above, communication data is mainly written into the Ethernet driver queue, the WiFi driver queue, and the WAN driver queue and forwarded. A specific forwarding process is as shown in Fig. 5-2. In the present embodiment, the MAC address of a Central Processing Unit (CPU) port of the multi-core processor is MAC 0. The MAC address of the Android A system is MAC 1, then the MAC address of a frame output queue associated with the network driver module A is MAC 1. The MAC address of the Android B system is MAC 2, then the MAC address of a frame output queue associated with the network driver module B is MAC 2, the MAC addresses of three frame output queues associated with the Ethernet driver are MAC 3, MAC 4 and MAC 5, respectively. The MAC addresses corresponding to two frame output queues associated with the WiFi driver are MAC 6 and MAC 7, respectively.

Situation 1 is that data communication is performed between the operating systems of different VMs 102;
when the Android A system of the first VM receives data sent by the applications A, the network driver module A performs data encapsulation, forms an MAC 1 data frame and sends out the MAC 1 data frame to a target address MAC 2; the VMM module 101 captures the MAC 1 data frame and sends the MAC 1 data frame to the switcher software module; the switcher software module performs target address inquiry for the MAC 2 address, and then adds the MAC 1 data frame to a frame output queue whose target address is MAC 2, i.e. the network driver module queue B, then sends the MAC 1 data frame to the network driver module B of the Android B system. The Android B system reads and responds to the MAC A data frame and the applications B executes the response operation;

Situation 2 is that data communication is performed between the operating system and the home network;
the Android A system establishes a connection with the home network through the wired way, uses the network driver module A to encapsulate data sent by the applications A into an MAC 1 data frame and sends out the MAC 1 data frame to a target address MAC 5; the VMM module 101 captures the MAC 1 data frame and sends the MAC 1 data frame to the switcher software module; the switcher software module performs target address inquiry for the MAC 5 address, and then adds the MAC 1 data frame to a frame output queue whose target address is MAC 5, i.e. the Ethernet driver queue which is associated with the Ethernet driver and whose address is MAC 5, and then sends the MAC 1 data frame to the Ethernet driver. The Ethernet driver sends the MAC 1 data frame whose target address is MAC 5 to the Ethernet switch ASCI 115. The Ethernet switch ASCI 115 sends, through the Ethernet interface/network cable, the MAC 1 data frame to a device having the MAC 5 address and connected to the home network;
the Android A system establishes a connection with the home network through the wireless way, uses the network driver module A to encapsulate data sent by the applications A into an MAC 1 data frame and sends out the MAC 1 data frame to a target address MAC 7; the VMM module 101 captures the MAC 1 data frame and sends the MAC 1 data frame to the switcher software module; the switcher software module performs target address inquiry for the MAC 7 address, and then adds the MAC 1 data frame to a frame output queue whose target address is MAC 7, i.e. the WiFi driver queue which is associated with the WiFi driver and whose address is MAC 7, and then sends the MAC 1 data frame to the WiFi driver. The WiFi driver sends the MAC 1 data frame whose target address is MAC 7 to the WiFi 116. The WiFi 116 sends, through the wireless way, the MAC 1 data frame to a device having the MAC 7 address and connected to the home network;

Situation 3 is that data communication is performed between the operating system and the WAN;
the Android B system receives data sent by the applications B, uses the network driver module B to encapsulate the data to form an MAC 2 data frame and sends out the MAC 2 data frame to a target address MAC 0; the VMM module 101 captures the MAC 2 data frame and sends the MAC 2 data frame to the switcher software module; the switcher software module performs target address inquiry for the MAC 0 address, and then adds the MAC 2 data frame to a frame output queue whose target address is MAC 0, i.e. the CPU output queue of the multi-core processor, then sends the MAC 2 data frame to an built-in software module 103 of an existing home gateway, and performs processing including NAT and IPsec; driven by the WAN driver, the multi-core processor sends, through the WAN 117, the MAC 2 data frame to the WAN;

Situation 4 is that data communication is performed between devices in the home network;
when two parties involved in communication are devices connected in the home network, data exchange may be performed directly through the Ethernet switch ASCI 115;
when the device 3 connected to an home internal wire network performs data communication with the device 4 connected to the home internal wire network, data generated by the device 3 is transmitted, through the Ethernet switch ASCI 115, to the Ethernet driver; the Ethernet driver encapsulates the data into a frame to form a data frame of a device 3 with a target address of MAC 7; the Ethernet driver sends the data frame of the device 3 to the switcher software module; the switcher software module performs target address inquiry, and then adds the data frame of the device 3 to a frame output queue with a target address of MAC 7, i.e. the WiFi driver queue, and then sends the data frame of the device 3 to the WiFi driver; the WiFi driver sends to the WiFi 116 the data frame of the device 3 with a target address of MAC 7; the WiFi 116 sends the data frame of the device 3 to the device 4 having a address of MAC 7 in the wireless way;

Situation 5 is that data communication is performed between a device in the home network and a WAN;
the device 3/device 4 connected to a home internal wired/wireless network needs to perform data communication with the device 5 connected to the WAN; data generated by the device 3/device 4 is transmitted, through the Ethernet switch ASCI 115/WiFi 116, to the Ethernet/ WiFi driver; the Ethernet/ WiFi driver encapsulates the data into a frame to form a data frame of the device 3/a data frame of the device 4 with a target address of MAC 0; the Ethernet/ WiFi driver sends the data frame of the device 3/the data frame of the device 4 to the switcher software module; the switcher software module performs target address inquiry, and then adds the data frame of the device 3/the data frame of the device 4 to a frame output queue with a target address of MAC 0, i.e. the CPU output queue of the multi-core processor, and then sends the data frame of the data frame of the device 3/the data frame of the device 4 to the home gateway software module 103 and performs processing including NAT and IPsec; driven by the WAN driver, the multi-core processor sends, through the WAN 117, the data frame of the device 3/the data frame of the device 4 to the device 5.

When implementing the embodiments above, the data communication is all unidirectional transmission which may be considered as forward transmission. Substantially, the embodiments of the disclosure may provide bi-directional transmission for the data communication, and an inverse transmission process is opposite to a forward transmission process.

In a home gateway and smart terminal integrated system provided by the embodiments of the disclosure, a home gateway adopts a multi-core processor architecture and virtualization technology, and has abundant software and hardware resources in addition to having a routing and forwarding function and etc. of an existing home gateway. A smart terminal included in the integrated system can use the software and hardware resources of the home gateway and a home network to complete rapid communication of the Internet of Things, wherein different smart terminals may be operated by different VMs, thus enhancing security isolation. The VM applies a user graphic interface, which facilitates operations for a smart household terminal. Various kinds of application software may be installed in an operating system included in the VM to realize function extension of the home gateway

What are described above are only embodiments of the disclosure, and are not used for limiting the disclosure. Those skilled in the art may apply other kinds of virtualization technologies and network technologies and etc. to make various modifications and changes to the disclosure. Any modifications, equivalent replacements, improvements and the like made within the principle of the disclosure shall be included in the protection scope of the disclosure.

## Claims

1. A home gateway and smart terminal integrated system, comprising a home gateway (1) and two smart terminals (2), wherein
each smart terminal (2) comprises a terminal hardware layer and a terminal software layer, and is configured to display a user graphic interface and support a user input operation; and
the home gateway (1) comprises a hardware layer (11) and a software layer (10) and is configured to perform software and hardware resource processing on the user graphic interface and the user input operation, and to send a processing result to the two smart terminals or an external network, or to receive data from outside and make a response;
wherein the software layer (10) comprises a Virtual Machine Monitor, VMM, module (101), a Virtual Machine, VM, (102) and a home gateway software module (103), wherein
the VMM module (101) is configured to establish a first VM and a second VM, and distribute and schedule a hardware resource for the first VM and the second VM;
the VM (102) comprises a smart terminal operating system and applications; the smart terminal operating system is configured to draw the user graphic interface and respond to the user input operation, and is further configured to complete data communication outside; and
the home gateway software module (103) is configured to operate a built-in software function of an existing home gateway;
wherein one of the two smart terminals is configured to connect via an Ethernet switch module of the home gateway to the first VM and the other smart terminal is configured to connect via a Wireless Fidelity, WiFi, access module of the home gateway to the second VM.

2. The home gateway and smart terminal integrated system according to claim 1, wherein the hardware layer (11) comprises a multi-core processor (111), a Random Access Memory, RAM, (112), a solid state driver, a Universal Serial Bus, USB, host (114), the Ethernet switch module (115), the WiFi access module (116), and an external network interface module (117).

3. The home gateway and smart terminal integrated system according to claim 1, wherein the VMM module (101) comprises a switcher software module, a first driver proxy, an Ethernet driver driver, a WiFi driver, and an external network driver, wherein
the switcher software module is configured to inquire for a Media Access Control, MAC, address, and write, according to the MAC address, data into a driver queue;
the Ethernet driver is provided with an Ethernet driver queue, and is configured to drive, when the integrated system performs wired communication with a home network, the integrated system to write data into the Ethernet driver queue;
the WiFi driver is provided with a WiFi driver queue and is configured to drive, when the integrated system performs wireless communication with a home network, the integrated system to write data into the WiFi driver queue; and
the external network driver is provided with an external network driver queue and is configured to drive, when the integrated system performs data communication with an external network, the integrated system to write data into the external network driver queue.

4. The home gateway and smart terminal integrated system according to claim 3, wherein the terminal software layer comprises a second driver proxy.

5. The home gateway and smart terminal integrated system according to claim 3 or 5, wherein the first driver proxy comprises a Gateway Display Driver Proxy, GDDP, and an input driver proxy; the second driver proxy comprises a terminal display driver proxy and a touch driver proxy, wherein
the GDDP and the terminal display driver proxy are configured to display the user graphic interface, and establish a link during initialization of the integrated system;
the input driver proxy and the touch driver proxy are configured to support the user input operation, and establish a link during initialization of the integrated system.

6. The home gateway and smart terminal integrated system according to claim 5, wherein the GDDP is further configured to store data.

7. A communication method for a home gateway and smart terminal integrated system, wherein the integrated system comprise a home gateway (1) and two smart terminals (2), wherein each smart terminal (2) comprises a terminal hardware layer and a terminal software layer; and the home gateway (1) comprises a hardware layer (11) and a software layer (10) which comprises a Virtual Machine Monitor, VMM, module (101), a Virtual Machine, VM, (102) comprising a smart terminal operating system and applications and a home gateway software module (103);
wherein the method comprises:
displaying, by each smart terminal, a user graphic interface and supporting, by each smart terminal, a user input operation;
performing, by the home gateway, software and hardware resource processing on the user graphic interface and the user input operation, and sending, by the home gateway, a processing result to the two smart terminals or an external network, or receiving, by the home gateway, data from outside and make a response;
establishing, by the VMM module (101), a first VM and a second VM, and distributing and scheduling a hardware resource for the first VM and the second VM;
drawing, by the smart terminal operating system, the user graphic interface and respond to the user input operation, and completing data communication outside; and
operating, by the home gateway software module (103), a built-in software function of an existing home gateway;
wherein one of the two smart terminals is configured to connect via an Ethernet switch module of the home gateway to the first VM and the other smart terminal is configured to connect via a Wireless Fidelity, WiFi, access module of the home gateway to the second VM.

## Patentansprüche

1. Integriertes Home -Gateway und Smart -Terminal - System, umfassend einen Home -Gateway (1) und zwei Smart - Terminals (2), wobei
jeder Smart -Terminal (2) eine Terminal -Hardware - Schicht und eine Terminal -Software -Schicht aufweist und so gestaltet ist, dass eine Benutzergrafik-Schnittstelle und eine Benutzer -Eingabeoperation angezeigt werden; und
wobei der Home -Gateway (1) eine Hardware -Schicht (11) und eine Software -Schicht (10) aufweist und so gestaltet ist, dass an der Benutzergrafik -Schnittstelle und der Benutzer -Eingabeoperation Hardware Ressourcen - Verarbeitung durchgeführt wird und dass ein Verarbeitungsergebnis an die beiden Smart -Terminals oder ein externes Netzwerk gesendet wird oder Daten von außerhalb empfangen und eine Antwort gegeben werden;
wobei die Software -Schicht (10) einen virtuellen Machine Monitor, VMM, Modul (101), eine virtuelle Maschine, VM, (102) und einen Home -Gateway -Software -Modul (103) aufweist, und
das VMM -Modul (101) so gestaltet ist, dass ein erstes VM und ein zweites VM gebildet wird, und eine Hardware - Ressource für das erste VM und das zweite VM verteilt und geplant wird;
wobei des weiteren das VM (102) ein Smart -Terminal - Betriebssystem mit Anwendungen aufweist, das Smart -Terminal -Betriebssystem so gestaltet ist, dass die Benutzergrafik - Schnittstelle gezeichnet wird und die Benutzer -Eingabeoperation beantwortet wird, und dass das VM (102) so gestaltet ist, dass die Datenkommunikation außerhalb vervollständigt wird; und
wobei das Home -Gateway -Softwaremodul (103) so gestaltet ist, dass eine eingebaute Softwarefunktion eines existierenden Home -Gateway betrieben wird;
und wobei schließlich einer der Smart -Terminals so gestaltet ist, dass über einen Ethernet -Schaltmodul des Home -Gateways mit dem ersten VM eine Verbindung hergestellt wird, und das andere Smart -Terminal so gestaltet ist, dass über ein Wireless Fidelity WiFi, Zugangsmodul des Home -Gateways mit dem zweiten VM ein Anschluß besteht.

2. Integriertes Home -Gateway und Smart -Terminal - System nach Anspruch 1, **dadurch gekennzeichnet, dass** die Hardware -Schicht (11) einen Mehrkernprozessor (111), einen Random Access Memory, RAM, (112), einen Festkörper -Treiber, einen Universal Serial Bus, USB, Arbeitsrechner (114), das Ethernet -Schaltmodul (115), das WiFi -Zugangsmodul (116) und ein externes Netzwerk -Schnittstellenmodul (117) aufweist.

3. Integriertes Home -Gateway und Smart -Terminal - System nach Anspruch 1, **dadurch gekennzeichnet, dass** das VMM -Modul (101) ein Schalter- Softwaremodul, ein erstes Treiber -Proxy , einen Ethernet -Treiber -Treiber, einen WiFi -Treiber und einen externen Netzwerk -Treiber aufweist, wobei das Schalter -Softwaremodul so gestaltet ist, dass nach einer Media Access Control, MAC, Adresse gefragt wird und gemäß der MAC -Adresse Daten in eine Treiberschlange geschrieben werden;
wobei der Ethernet -Treiber mit einer Ethernet - Treiberschlange versehen ist und so gebaut ist, dass dann, wenn das integrierte System eine gedrahtete Kommunikation mit einem Heimnetzwerk bildet, das integrierte System angetrieben wird, um Daten in die Ethernet -Treiber -Schlange zu schreiben;
wobei des weiteren der WiFi -Treiber mit einer WiFi - Treiberschlange versehen und so gebaut ist, dass dann, wenn das integrierte System drahtlose Kommunikation mit einem Heimnetzwerk betreibt, das integrierte System Daten in die WiFi - Treiberschlange schreibt; und
wobei der externe Netzwerktreiber mit einer externen Netzwerk -Treiberschlange versehen und so gebaut ist, dass er dann, wenn das integrierte System Datenkommunikation mit einem externen Netzwerk durchführt, das integrierte System veranlaßt, Daten in die externe Netzwerk -Schlange zu schreiben.

4. Integriertes Home -Gateway und Smart -Terminal - System nach Anspruch 3, **dadurch gekennzeichnet, dass** die Terminal -Softwareschicht eine zweite Treiber -Proxy aufweist.

5. Integriertes Home -Gateway und Smart -Terminal - System nach Anspruch 3 oder 5, **dadurch gekennzeichnet, dass** die erste Treiber -Proxy eine Gateway -Display -Driver -Proxy, GDDP, und eine Eingabe -Treiber -Proxy aufweist, und dass die zweite Treiber -Proxy eine Terminal -Display -Treiber -Proxy und eine Berührungs -Treiber -Proxy aufweist, wobei
die GDDP und die Terminal -Display -Treiber -Proxy dazu dienen, die Benutzergrafik -Schnittstelle darzustellen und während des Beginns des integrierten Systems eine Verbindung herzustellen;
die Eingabe -Treiber -Proxy und die Berührungs - Treiber -Proxy dazu dienen, die Benutzer-Eingabe im Auftag zu nehmen, und während des Beginns des integrierten Systems eine Verbindung herzustellen

6. Integriertes Home -Gateway und Smart -Terminal - System nach Anspruch 5, **dadurch gekennzeichnet, dass** die GDDP des weiteren dazu dient, Daten zu speichern.

7. Kommunikationsverfahren für ein integriertes Home -Gateway und Smart -Terminal -System, bei dem das integrierte System ein Home -Gateway (1) und zwei Smart -Terminals (2) aufweist, wobei jeder Smart -Terminal (2) eine Terminal - Hardware -Schicht und eine Terminal -Software -Schicht besitzt, und das Home -Gateway (1) eine Hardware -Schicht (11) und eine Software -Schicht (10) aufweist, die einen Virtual Machine Monitor, VMM, Modul (101), eine Virtual Machine, VM, (102) bilden mit einem Smart -Terminal -Betriebssystem und Anwendungen und einem Home -Gateway -Software -Modul (103),
wobei das Verfahren die folgenden Schritte bildet:
durch jedes Smart -Terminal Darstellen einer Benutzergrafik -Schnittstelle und jeden Smart -Terminal Unterstützen einer Benutzer -Eingabeoperation;
durch den Home -Gateway Durchführen von Software- und Hardware - Quellenbearbeitung der Benutzergrafik - Schnittstelle und der Benutzer -Eingabeoperation und durch den Home -Gateway Senden eines Bearbeitungsergebnisses an die zwei Smart -Terminals oder ein externes Netzwerk oder durch den Home -Gateway Empfangen von Daten von außerhalb und Durchführen einer Antwort;
durch das VMM -Modul (101) Erstellen einer ersten VM und einer zweiten VM und Verteilen sowie Planen einer Hardware -Quelle durch die erste VM und die zweite VM;
durch das Smart -Terminal -Betriebssystem Zeichnen der Benutzergrafik -Schnittstelle und Antworten auf die Benutzer -Eingabeoperation sowie Vervollständigen der Datenkommunikation außerhalb; und
durch das Home -Gateway -Softwaremodul (103) Betreiben einer Einbau -Software -Funktion eines existierenden Home - Gateways;
wobei einer der zwei Smart -Terminals so gestaltet ist, dass über ein Ethernet -Schaltmodul des Home -Gateways mit der ersten VM und der anderen ein Smart -Terminal gebildet wird, um über ein Wireless Fidelity, WiFi, ein Zugangsmodul des Home -Gateways mit dem zweiten VM zu verbinden.

## Revendications

1. Système intégré de passerelle domestique et de terminaux intelligents, comprenant une passerelle domestique (1) et deux terminaux intelligents (2), dans lequel
chaque terminal intelligent (2) comprend une couche matérielle de terminal et une couche logicielle de terminal, et est configuré pour afficher une interface graphique utilisateur et prendre en charge une opération d'entrée utilisateur ; et
la passerelle domestique (1) comprend une couche matérielle (11) et une couche logicielle (10) et est configurée pour réaliser un traitement de ressource logicielle et matérielle sur l'interface graphique utilisateur et l'opération d'entrée utilisateur, et pour envoyer un résultat de traitement aux deux terminaux intelligents ou à un réseau externe, ou pour recevoir des données en provenance de l'extérieur et faire une réponse ;
dans lequel la couche logicielle (10) comprend un module gestionnaire de machine virtuelle, VMM (101), une machine virtuelle, VM (102) et un module logiciel de passerelle domestique (103), dans lequel
le module VMM (101) est configuré pour établir une première VM et une seconde VM, et distribuer et ordonnancer une ressource matérielle pour la première VM et la seconde VM ;
la VM (102) comprend un système d'exploitation de terminal intelligent et des applications ; le système d'exploitation de terminal intelligent est configuré pour tracer l'interface graphique utilisateur et répondre à l'opération d'entrée utilisateur, et est en outre configuré pour achever une communication de données à l'extérieur ; et
le module logiciel de passerelle domestique (103) est configuré pour exploiter une fonction logicielle intégrée d'une passerelle domestique existante ;
dans lequel l'un des deux terminaux intelligents est configuré pour se connecter via un module de commutation Ethernet de la passerelle domestique à la première VM et l'autre terminal intelligent est configuré pour se connecter via un module d'accès sans fil, Wi-Fi, de la passerelle domestique à la seconde VM.

2. Système intégré de passerelle domestique et de terminaux intelligents selon la revendication 1, dans lequel la couche matérielle (11) comprend un processeur multicoeur (111), une mémoire vive, RAM (112), un pilote à semi-conducteurs, un hôte de bus universel série, USB (114), le module de commutation Ethernet (115), le module d'accès Wi-Fi (116), et un module d'interface de réseau externe (117).

3. Système intégré de passerelle domestique et de terminaux intelligents selon la revendication 1, dans lequel le module VMM (101) comprend un module logiciel de commutateur, un premier mandataire de pilote, un pilote Ethernet, un pilote Wi-Fi, et un pilote de réseau externe, dans lequel
le module logiciel de commutateur est configuré pour demander une adresse de contrôle d'accès au support, MAC, et écrire, selon l'adresse MAC, des données dans une file d'attente de pilote ;
le pilote Ethernet est pourvu d'une file d'attente de pilote Ethernet, et est configuré pour piloter, lorsque le système intégré réalise une communication câblée avec un réseau domestique, le système intégré pour écrire des données dans la file d'attente de pilote Ethernet ;
le pilote Wi-Fi est pourvu d'une file d'attente de pilote Wi-Fi et est configuré pour piloter, lorsque le système intégré réalise une communication sans fil avec un réseau domestique, le système intégré pour écrire des données dans la file d'attente de pilote Wi-Fi ; et
le pilote de réseau externe est pourvu d'une file d'attente de pilote de réseau externe et est configuré pour piloter, lorsque le système intégré réalise une communication de données avec un réseau externe, le système intégré pour écrire des données dans la file d'attente de pilote de réseau externe.

4. Système intégré de passerelle domestique et de terminaux intelligents selon la revendication 3, dans lequel la couche logicielle de terminal comprend un second mandataire de pilote.

5. Système intégré de passerelle domestique et de terminaux intelligents selon la revendication 3 ou 5, dans lequel le premier mandataire de pilote comprend un mandataire de pilote d'affichage de passerelle, GDDP, et un mandataire de pilote d'entrée ; le second mandataire de pilote comprend un mandataire de pilote d'affichage de terminal, et un mandataire de pilote tactile, dans lequel
le GDDP et le mandataire de pilote d'affichage de terminal sont configurés pour afficher l'interface graphique utilisateur, et établir une liaison pendant l'initialisation du système intégré ;
le mandataire de pilote d'entrée et le mandataire de pilote tactile sont configurés pour prendre en charge l'opération d'entrée utilisateur, et établir une liaison pendant l'initialisation du système intégré.

6. Système intégré de passerelle domestique et de terminaux intelligents selon la revendication 5, dans lequel le GDDP est en outre configuré pour stocker des données.

7. Procédé de communication pour un système intégré de passerelle domestique et de terminaux intelligents, dans lequel le système intégré comprend une passerelle domestique (1) et deux terminaux intelligents (2), dans lequel chaque terminal intelligent (2) comprend une couche matérielle de terminal et une couche logicielle de terminal ; et la passerelle domestique (1) comprend une couche matérielle (11) et une couche logicielle (10) qui comprend un module gestionnaire de machine virtuelle, VMM (101), une machine virtuelle VM, (102) comprenant un système d'exploitation de terminal intelligent et des applications et un module logiciel de passerelle domestique (103) ;
dans lequel le procédé comprend :
l'affichage, par chaque terminal intelligent, d'une interface graphique utilisateur et la prise en charge, par chaque terminal intelligent, d'une opération d'entrée utilisateur ;
la réalisation, par la passerelle domestique, d'un traitement de ressource logicielle et matérielle sur l'interface graphique utilisateur et l'opération d'entrée utilisateur, et l'envoi, par la passerelle domestique, d'un résultat de traitement aux deux terminaux intelligents ou à un réseau externe, ou la réception, par la passerelle domestique, de données en provenance de l'extérieur et le fait de faire une réponse ;
l'établissement, par le module VMM (101), d'une première VM et d'une seconde VM, et la distribution et l'ordonnancement d'une ressource matérielle pour la première VM et la seconde VM ;
le traçage, par le système d'exploitation de terminal intelligent, de l'interface graphique utilisateur et la réponse à l'opération d'entrée utilisateur, et l'achèvement d'une communication de données à l'extérieur ; et
l'exploitation, par le module logiciel de passerelle domestique (103), d'une fonction logicielle intégrée d'une passerelle domestique existante ;
dans lequel l'un des deux terminaux intelligents est configuré pour se connecter via un module de commutation Ethernet de la passerelle domestique à la première VM et l'autre terminal intelligent est configuré pour se connecter via un module d'accès sans fil, Wi-Fi, de la passerelle domestique à la seconde VM.
